# FASCICULE DE BREVET EUROPEEN

(11) **EP 3 501 326 B1**
(45) Date de publication et mention de la délivrance du brevet: **06.03.2024**
(21) Numéro de dépôt: 17210482.0
(22) Date de dépôt: 22.12.2017
(51) Int. Cl.: A44C 17/04, B23P 5/00

(54) **ENSEMBLE DÉCORATIF RÉALISÉ PAR SERTISSAGE**
DEKORANORDNUNG, DIE DURCH CRIMPEN ERZEUGT WIRD
DECORATIVE ASSEMBLY MADE BY CRIMPING

(43) Date de publication de la demande: 26.06.2019
(73) Titulaire: Omega SA, 2502 Biel/Bienne (CH)
(72) Inventeur: Uldry, Igor-Emmanuel, 2016 Cortaillod (CH); Baumgartner, Daniel, 3173 Oberwangen b. Bern (CH); Lauper, Stéphane, 2016 Cortaillod (CH); Kissling, Gregory, 2520 La Neuveville (CH)
(74) Mandataire: ICB SA

(56) Documents cités:
- FR-A- 797 091
- FR-A- 834 040
- US-A- 1 182 534
- US-A- 4 972 685

## Description

### Objet de l'invention

La présente invention concerne un chaton permettant de sertir un élément décoratif dans un ensemble décoratif.

### Arrière-plan technologique

Il est connu dans l'art antérieur des pièces décoratives destinées à être rapportées sur un objet portable tel une montre ou un bijou et dans lesquelles des éléments esthétiques sont sertis sur les parties dudit objet portable faisant office de support.

Pour cela, le support est réalisé en alliage métallique et est usiné pour que des logements apparaissent. Lors de cet usinage, des moyens d'accroche se présentant sous la forme de crochets, plus communément nommés grains ou griffes sont réalisés. Généralement, ces grains sont réalisés avec la matière formant l'objet portable c'est-à-dire de façon monobloc avec l'objet. Lorsqu'un élément esthétique, telle une pierre précieuse, doit être serti, ce dernier est placé dans un logement et les grains sont rabattus à froid par déformation plastique de sorte à maintenir ledit élément esthétique dans le logement. Cette méthode de sertissage est largement répandue pour sertir des pierres précieuses sur des supports en métal car ce dernier présente une capacité de déformation plastique avantageuse. La déformation plastique à froid des métaux cristallins et leurs alliages est possible grâce aux mouvements des dislocations présentes dans les réseaux cristallins. La limite élastique, c'est-à-dire la contrainte au-delà de laquelle un matériau commence à se déformer plastiquement, d'un alliage cristallin dépend des éléments composant ce dernier ainsi que de l'historique thermo-mécanique de l'alliage. Pour le sertissage traditionnel, des alliages ayant des limites élastiques relativement faibles sont généralement choisis afin de faciliter le travail du sertisseur. En plus d'une limite élastique relativement faible, il est nécessaire que l'alliage présente un allongement avant rupture suffisant afin de pouvoir rabattre les grains sans qu'ils cassent. Tout comme pour la limite élastique, cet allongement est la conséquence à la fois des éléments présents dans l'alliage et de l'histoire thermo-mécanique de ce dernier. Par exemple, les alliages d'or utilisés dans l'horlogerie ont une limite élastique de l'ordre de 200-400MPa et un allongement à la rupture de 20-40%. Les aciers inoxydables de type 1.4435 ont une limite élastique de 200-300 MPa et un allongement à la rupture de 25-45%.

Néanmoins, un inconvénient de cette méthode est qu'elle est cantonnée aux supports réalisés en métaux ou alliages métalliques ductiles. Or, de plus en plus de pièces d'horlogerie sont réalisées dans des matériaux ne présentant pas de déformation plastique, souvent durs et/ou fragiles, comme par exemple la céramique, le silicium, le saphir, des alliages intermétalliques ou encore les composites à matrice métallique, naturelle ou polymère.

De ce fait, il n'est plus possible d'utiliser la méthode traditionnelle pour sertir des éléments esthétiques comme par exemple des pierres précieuses.

Cette opération de sertissage est donc généralement remplacée par une opération de collage. Le collage a pour désavantage de ne pas assurer une tenue des pierres à 100% car contrairement au sertissage, cette technique n'implique pas une retenue mécanique des pierres. En effet, les zones collées étant dans la majorité des cas exposées à l'environnement extérieur (humidité, sueur, UV, pollution de l'air,...), la tenue du collage sur le long terme est rendue difficile. Par conséquent, la tenue des pierres n'est pas assurée ce qui n'est pas acceptable pour des produits de qualité.

Le document brevet EP 2 796 297 décrit une solution à ce problème en utilisant un matériau intermédiaire entre le support indéformable et l'élément décoratif. Dans ce document, une cavité est creusée dans le support, ladite cavité étant ensuite remplie d'un matériau ductile permettant le sertissage de l'élément décoratif. Le remplissage de la cavité nécessite l'utilisation de mode de mise en forme à chaud, tel que la coulée, le formage à chaud, le chassage à chaud ou la densification d'une poudre métallique. Ce type de procédé induit donc des contraintes thermiques complexes à contrôler et un outillage spécifique.
Le document US 9,402,450 décrit un chaton comprenant des griffes non déformables s'insérant dans des gorges ménagées dans une pierre précieuse, la base du chaton s'insérant dans un trou d'une pièce de support. Dans ce document, une déformation plastique de la base du chaton ou de la pièce de support permet de fixer le chaton au support selon un principe similaire à un rivetage. Cette déformation plastique s'accompagne d'un resserrage des griffes, améliorant la stabilité de la fixation. Un inconvénient de ce chaton est que la pierre doit être pré-montée. En outre, ce dispositif est peu adapté à l'insertion dans un matériau fragile, et ne permet pas une imbrication des chatons, les trous de rivetage étant forcément disjoints pour permettre une fixation convenable des éléments. Enfin, un accès au chaton par l'arrière est indispensable pour la fixation définitive dans le support, ce qui rend ce chaton inadapté à des trous borgnes, pourtant indispensable dans le cas par exemple de boitier de montre.

Le document US 1 182 534 décrit un dispositif de fixation d'une pierre précieuse sur une bague.

Le document F R797 091 décrit une monture pour pierres précieuses comprenant un tronc de cône muni à sa base de deux joncs filetés.

Le document FR 834 040 décrit un dispositif de sertissage invisible de pierres précieuses comprenant une coupelle munie à l'intérieur de son bord supérieur d'un premier crampon destiné à s'engager dans des entailles prévues dans la culasse de la pierre

Le document US4972685 décrit un ensemble décoratif pourvu d'un chaton comprenant un anneau élastique ouvert supportant des éléments de sertissage dudit élément décoratif, ce chaton étant placé à l'état comprimé radialement dans une creusure ménagée dans un support d'un article à décorer, dans lequel les éléments de sertissage sont déformables plastiquement et dans lequel le support est réalisé dans un matériau ne présentant pas de déformation plastique suffisante pour permettre le sertissage de l'élément décoratif.

### Résumé de l'invention

La présente invention concerne un ensemble décoratif selon la revendication 1.

De préférence, le chaton comprend des éléments de maintien coopérant avec des éléments de maintien correspondant dans la creusure. Ces éléments de maintien comprennent de préférence au moins un évidement ménagé dans la paroi latérale de la creusure ou dans la paroi latérale du chaton et une saillie dans la paroi complémentaire.

Avantageusement, le chaton ou la creusure comprend au moins une surface oblique, ladite surface oblique étant agencée de façon à ce que le chaton soit comprimé lorsqu'il est chassé dans la creusure.

Dans un mode de réalisation préféré, l'ensemble décoratif de l'invention comprend au moins deux creusures et deux chatons et l'un des chatons s'emboite dans un logement du chaton précédent, ce logement étant de préférence disposé dans le prolongement de l'ouverture du chaton. Avantageusement, le chaton comprend au moins ou est composé d'au moins un métal précieux sélectionné parmi le groupe consistant en or, platine, palladium, rhénium, ruthénium, rhodium, argent, iridium, osmium, et leurs alliages.

Alternativement le chaton peut aussi être composé d'un alliage métallique sous forme amorphe ou au moins partiellement amorphe.

Un deuxième aspect de l'invention concerne un article décoré comprenant un ensemble décoratif selon l'invention.

### Brève description des figures

- La figure 1 représente un exemple de chaton.
- Les figures 2 à 6 représentent schématiquement en coupe la séquence d'introduction d'un chaton dans un ensemble décoratif selon l'invention.
- Les figures 7 et 8 représentent des coupes d'autres exemples de couples chatons/creusures selon l'invention.
- La figure 9 représente un article décoré comprenant un ensemble décoratif comprenant plusieurs chatons.
- La figure 10 représente un détail de l'article décoré de la figure 9 avant le sertissage des éléments décoratifs.
- La figure 11 représente un autre détail où un des éléments décoratif est visible en coupe.
- La figure 12 représente une vue éclatée d'un support, d'un chaton et d'un ensemble décoratif.

### Description détaillée de l'invention

La présente invention concerne un chaton 1 de support d'un élément décoratif tel qu'une pierre précieuse 10 dans un substrat 9 ne permettant pas suffisamment de déformation plastique pour permettre un sertissage traditionnel. Il s'agit généralement de matériaux durs et cassants comme la céramique, le silicium, le saphir, des alliages intermétalliques ou encore des composites à matrice métallique, naturelle ou polymère.

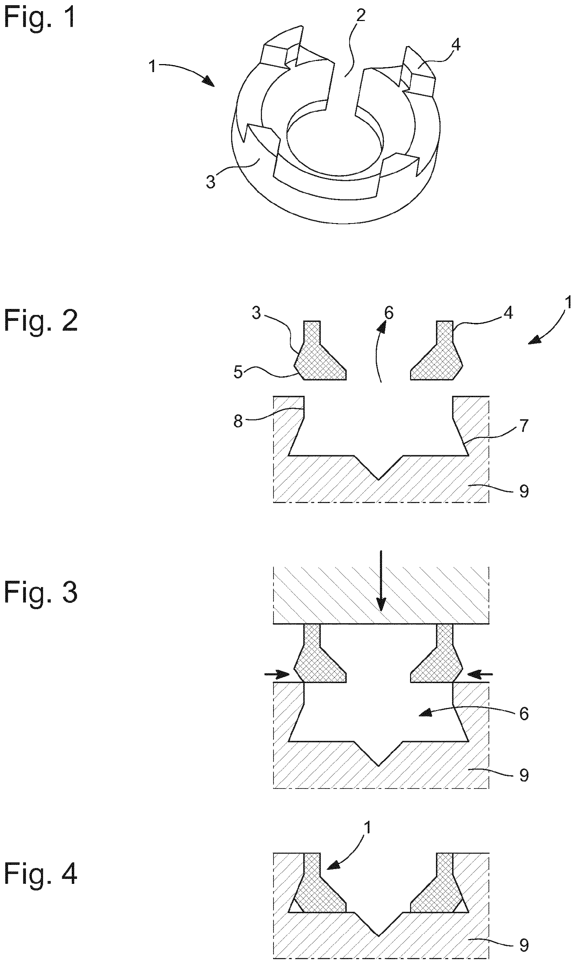

Selon l'invention un chaton 1 intermédiaire est inséré dans une creusure 6 ménagée dans le substrat 9. Tel que représenté à la figure 1, ce chaton 1 est essentiellement constitué d'un anneau comprenant une ouverture 2 permettant une déformation élastique du chaton 1. La compression élastique de l'anneau ouvert permet l'insertion du chaton 1 dans une creusure 6. Le retour élastique après l'insertion dans la creusure 6 permet alors une fixation du chaton 1 sans jeu dans le substrat 9.

La partie centrale du chaton 1 comprend une cavité apte à accueillir un élément décoratif tel qu'une pierre précieuse.

La partie supérieure du chaton 1 comprend des éléments de sertissage 4 déformables plastiquement de façon à pouvoir sertir l'élément décoratif 10.

L'anneau élastique peut être comprimé, avant son insertion, à l'aide d'un outil adéquat, tel qu'une pince à circlip ou pince seegers.

Néanmoins, lorsque le chaton est de faible dimension, comme c'est souvent le cas pour des pierres de joaillerie, celui-ci, et/ou la creusure 6 comprend de préférence une surface inclinée 5, 15, 16, 19 permettant de comprimer le chaton 1 lorsque l'on chasse le chaton 1 dans la creusure 6.

Les parois de la creusure sont de préférence perpendiculaires à la surface du support 9, formant un cylindre droit de section quelconque. Dans ce cas, le chaton 1 est maintenu par les forces de frictions engendrées par la pression exercée par le chaton précontraint sur les parois de la creusure. De façon alternative avantageuse, la creusure 6 présente une légère conicité, la surface d'une section droite de la creusure augmentant légèrement avec la profondeur, de façon à permettre un ancrage mécanique efficace d'un chaton 1 présentant la même conicité.

Outre les forces de friction et l'ancrage mécanique susmentionné, le chaton 1 et la creusure peuvent comprendre des moyens d'ancrage supplémentaires tel qu'une gorge s'emboitant dans une saillie correspondante.

Le matériau formant le chaton 1 doit à la fois être suffisamment ductile pour permettre la déformation plastique nécessaire au sertissage de l'élément décoratif 10 et simultanément permettre une déformation élastique réversible suffisante pour permettre l'ancrage mécanique du chaton 1 dans la creusure.

Avantageusement, ce matériau comprend de l'or, du platine, du palladium, du rhénium, du ruthénium, du rhodium, de l'argent, de l'iridium, de l'osmium, ou un alliage comprenant au moins l'un de ces éléments.

La figure 2 représente un chaton 1 prêt à être inséré dans une creusure 6 d'un substrat 9. Ce chaton comprend une surface 3 formant saillie, coopérant, lors de la fixation du chaton, avec une surface inclinée 7 formant un évidement dans la creusure. La partie inférieure du chaton présente une surface conique 5 dont le diamètre inférieur est légèrement plus petit que le diamètre de l'orifice supérieur de la creusure.

La figure 3 représente l'étape d'enchâssement du chaton dans la creusure. L'utilisateur pousse le chaton dans la creusure, ce qui a pour effet de pousser la surface conique 5 de la partie inférieure du chaton sur les bords supérieurs de la creusure. Cette pression verticale sur la surface conique 5 a pour effet de comprimer le chaton (l'anneau élastique) qui peut alors entrer dans la creusure 6.

A la figure 4, le chaton a été poussé au fond de la creusure. A cette position, le chaton ré augmente son diamètre sous l'effet de l'élasticité, et la surface latérale du chaton formant saillie 5 vient occuper la gorge formée par la surface inclinée 7 de la creusure 6. Cette dilatation élastique du chaton permet un ancrage mécanique d'excellente qualité.

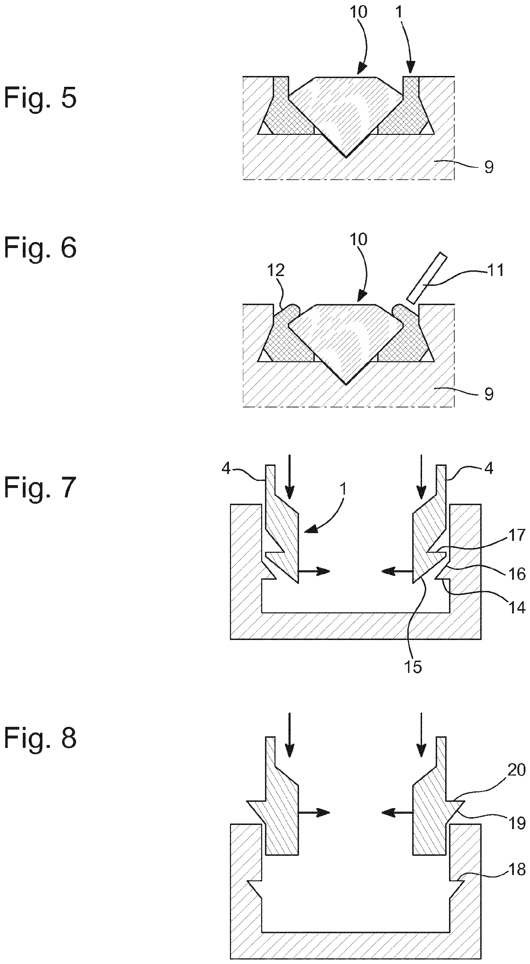

La figure 5 montre le chaton de la figure 4 où l'on a disposé un élément décoratif 10. Cet élément décoratif 10 est ensuite serti par déformation plastique des éléments de sertissage 12 au moyen d'un outil de sertissage adéquat 11 comme représenté à la figure 6.

La figure 7 représente un autre exemple de chaton où l'ancrage mécanique est obtenu par la présence d'une saillie 14 sur la face interne de la creusure, coopérant avec une gorge 17 ménagée dans le chaton. Dans cet exemple, la compression du chaton est obtenue grâce à une surface conique 15 à la base du chaton, et, aidée, au moment de l'enclipsage, par une seconde surface conique 16 sur la partie supérieure de la saillie 14.

La figure 8 représente un autre exemple de chaton, où l'ancrage mécanique est obtenu par une saillie 20 dépassant de la surface latérale du chaton et coopérant avec un évidement 18 dans la paroi latérale de la creusure. A nouveau, une surface conique 19 au bas de la saillie 20 permet de comprimer le chaton lors de l'enchâssement de celui-ci dans la creusure.

Qu'il s'agisse de saillie ou de gorge, les moyens de maintien peuvent soit être présents sur l'ensemble du contour du chaton et de la creusure, soit être discontinus. Dans ce dernier cas, ces moyens de maintien peuvent être disposés de façon à garantir un positionnement angulaire adéquat du chaton.

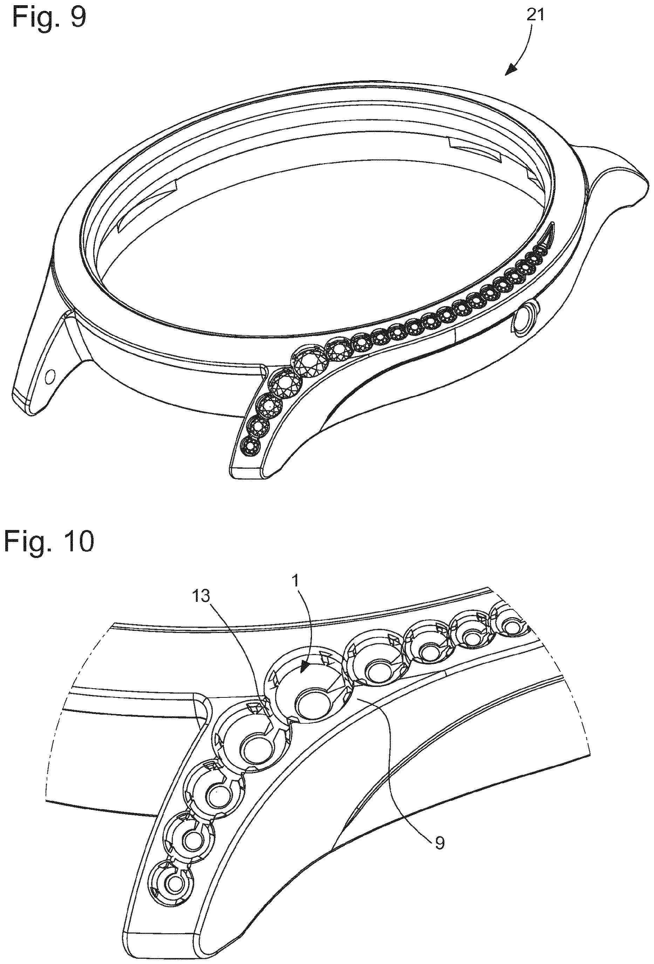

La figure 9 présente une pièce décorative sous la forme d'un boitier de montre comprenant une pluralité de chatons enchâssés dans une pluralité de creusures contiguës. On observe à la figure 10 que les chatons successifs s'emboitent les uns dans les autres au niveau de leurs ouvertures (2) respectives. Ces ouvertures en particulier sont contiguës à un évidement (13) présentant précisément le profil du chaton suivant. Cet emboitement présente de nombreux avantages.

Un premier avantage est de forcer un positionnement angulaire précis du chaton, ce qui oriente de façon régulière les grains de sertissage 4,12 visibles. Un second avantage est de bloquer les chatons en position ouverte, améliorant encore leur ancrage mécanique dans le support.

La creusure du substrat peut être réalisée par tout moyen adéquat, tel que l'usinage, le fraisage, l'ablation laser, voir directement lors du moulage du support. Par exemple, dans le cas d'un support céramique, la creusure peut être obtenue par usinage ou ablation laser de la céramique crue, le support creusé étant ensuite cuit et densifié.

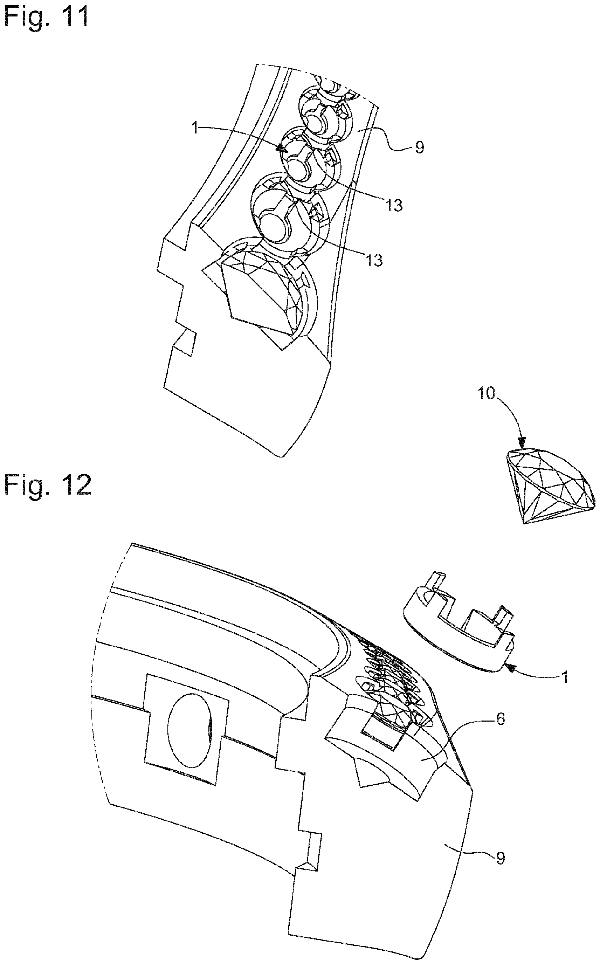

Comme on le voit aux figures 11 et 12, le chaton est particulièrement bien adapté à la fixation de pierres précieuses dans des trous borgnes et ne nécessite pas d'accès à l'arrière du support lors de la fixation de l'élément décoratif. Cette caractéristique est particulièrement avantageuse lorsque l'élément décoratif est destiné à être inséré dans un dispositif massif ou étanche comme le boitier d'une montre.

### Références numériques des figures

1 : chaton
2 : ouverture du chaton
3 : surface de maintien du chaton
4 : élément de sertissage
5 : surface d'enchâssement du chaton
6 : creusure
7 : surface de maintien dans le support
8 : surface d'enchâssement du support
9 : support
10 : Elément décoratif
11 : outil de sertissage
12 : élément de sertissage fermé
13 : zone d'emboitement des chatons
14 : saillie de maintien dans la paroi de la creusure
15, 16 : surface conique de compression du chaton
17: gorge de maintien ménagée dans la paroi du chaton
18 : gorge de maintien ménagée dans la paroi de la creusure
19 : surface de compression du chaton
20 : saillie de maintien du chaton
21 : article décoré

## Revendications

1. Ensemble décoratif pourvu d'un chaton (1) comprenant un anneau élastique ouvert supportant des éléments de sertissage (4, 12) dudit élément décoratif (10), ce chaton étant placé à l'état comprimé radialement dans une creusure ménagée dans un support d'un article à décorer (6) et étant maintenu sans jeu dans le substrat par retour élastique de l'anneau, chaton dans lequel les éléments de sertissage sont déformables plastiquement et dans lequel le support (9) est réalisé dans un matériau ne présentant pas de déformation plastique suffisante pour permettre le sertissage de l'élément décoratif (10), l'élément décoratif (10) étant serti par déformation plastique des éléments de sertissage (4,12).

2. Ensemble décoratif selon la revendication 1 dans lequel le chaton (1) comprend des éléments de maintien (3, 17, 20) coopérant avec des éléments de maintien (7, 14, 18) correspondant dans la creusure (6).

3. Ensemble décoratif selon la revendication 2 dans lequel les éléments de maintien comprennent au moins un évidement (7, 17, 18) ménagé dans la paroi latérale de la creusure (6) ou dans la paroi latérale du chaton (1) et une saillie (3, 16, 20) dans la paroi complémentaire.

4. Ensemble décoratif selon l'une des revendications 2 et 3 dans lequel le chaton (1) ou la creusure (6) comprend au moins une surface oblique (5, 15, 16, 19), ladite surface oblique étant agencée de façon à ce que le chaton (1) soit comprimé lorsque le chaton (1) est chassé dans la creusure (9).

5. Ensemble décoratif selon l'une quelconque des revendications précédentes comprenant au moins deux creusures (6) et deux chatons (1) dans lequel un des chatons (1) s'emboite dans un logement (13) du chaton (1) précédent.

6. Ensemble décoratif selon la revendication 5 dans lequel le logement (13) est dans le prolongement de l'ouverture (2) de l'ouverture du chaton précédent.

7. Ensemble décoratif selon l'une quelconque des revendications précédentes dans lequel le chaton (1) comprend au moins un métal précieux sélectionné parmi le groupe consistant en or, platine, palladium, rhénium, ruthénium, rhodium, argent, iridium, osmium, et leurs alliages.

8. Ensemble décoratif selon l'une quelconque des revendications précédentes dans lequel la creusure est un trou borgne.

9. Article décoré comprenant un ensemble décoratif selon l'une des revendications 1 à 8.

## Patentansprüche

1. Dekorative Anordnung, die mit einem Chaton (1) versehen ist, das einen offenen elastischen Ring umfasst, der Fassungselemente (4, 12) eines dekorativen Elements (10) trägt, wobei das Chaton in einem radial komprimierten Zustand in einer Vertiefung platziert wird, die in einer Stütze eines zu dekorierenden Artikels (6) ausgebildet ist, und durch elastische Rückfederung des Rings in dem Substrat ohne Spiel gehalten wird, wobei in dem Chaton die Fassungselemente plastisch verformbar sind und die Stütze (9) aus einem Material hergestellt ist, das keine ausreichende plastische Verformung aufweist, um das Einfassen des dekorativen Elements (10) zu ermöglichen, wobei das dekorative Element (10) durch plastische Verformung der Fassungselemente (4, 12) eingefasst wird.

2. Dekorative Anordnung nach Anspruch 1, wobei das Chaton (1) Halteelemente (3, 17, 20) umfasst, die mit den entsprechenden Halteelemente (7, 14, 18) in der Vertiefung (6) zusammenwirken.

3. Dekorative Anordnung nach Anspruch 2, wobei die Halteelemente mindestens eine Aushöhlung (7, 17, 18), die in der Seitenwand der Vertiefung (6) oder in der Seitenwand des Chatons (1) ausgebildet ist, und einen Vorsprung (3, 16, 20) in der komplementären Wand umfassen.

4. Dekorative Anordnung nach einem der Ansprüche 2 und 3, wobei das Chaton (1) oder die Vertiefung (6) mindestens eine schräge Fläche (5, 15, 16, 19) umfasst, wobei die schräge Fläche derart angeordnet ist, dass das Chaton (1) komprimiert wird, wenn das Chaton (1) in die Vertiefung (9) gedrückt wird.

5. Dekorative Anordnung nach einem der vorhergehenden Ansprüche, umfassend mindestens zwei Vertiefungen (6) und zwei Chatons (1), wobei eines der Chatons (1) in einen Sitz (13) des vorherigen Chatons (1) eingreift.

6. Dekorative Anordnung nach Anspruch 5, wobei sich der Sitz (13) im Fortsatz der Öffnung (2) der Öffnung des vorherigen Chatons (1) befindet.

7. Dekorative Anordnung nach einem der vorhergehenden Ansprüche, wobei das Chaton (1) mindestens ein Edelmetall umfasst, das aus der Gruppe bestehend aus Gold, Platin, Palladium, Rhenium, Ruthenium, Rhodium, Silber, Iridium, Osmium und deren Legierungen ausgewählt wird.

8. Dekorative Anordnung nach einem der vorhergehenden Ansprüche, wobei die Vertiefung ein Sackloch ist.

9. Dekorativer Artikel, der eine dekorative Anordnung nach einem der Ansprüche 1 bis 8 umfasst.

## Claims

1. Decorative assembly provided with a setting (1) comprising an open elastic ring carrying elements (4, 12) for setting a decorative element (10), said setting being placed in a radially compressed state inside a hollow provided in a support of an article to be decorated (6) and being held without play in the substrate by the elastic recovery of the ring, in which setting the setting elements are plastically deformable and wherein the support (9) is made of a material which does not exhibit sufficient plastic deformation to allow the decorative element (10) to be set, the decorative element (10) being set by plastic deformation of the setting elements (4, 12).

2. Decorative assembly according to claim 1, wherein the setting (1) comprises holding elements (3, 17, 20) cooperating with corresponding holding elements (7, 14, 18) in the hollow (6).

3. Decorative assembly according to claim 2, wherein the holding elements comprise at least one recess (7, 17, 18) arranged in the lateral wall of the hollow (6) or in the lateral wall of the setting (1) and a protrusion (3, 16, 20) in the complementary wall.

4. Decorative assembly according to any of claims 2 and 3, wherein the setting (1) or the hollow (6) comprises at least one oblique surface (5, 15, 16, 19), said oblique surface being arranged such that the setting (1) is compressed when the setting (1) is pressed into the hollow (9).

5. Decorative assembly according to any one of the preceding claims, comprising at least two hollows (6) and two settings (1) wherein one of the settings (1) fits into a housing (13) of the preceding setting (1).

6. Decorative assembly according to claim 5, wherein the housing (13) is in the extension of the opening (2) of the preceding setting.

7. Decorative assembly according to any one of the preceding claims, wherein the setting (1) comprises at least one precious metal selected from the group consisting of gold, platinum, palladium, rhenium, ruthenium, rhodium, silver, iridium, osmium, and their alloys.

8. Decorative assembly according to any one of the preceding claims, wherein the hollow is a blind hole.

9. Decorated article comprising a decorative assembly according to any of claims 1 to 8.
